# EUROPÄISCHE PATENTSCHRIFT

(11) **EP 2 221 184 B1**
(45) Veröffentlichungstag und Bekanntmachung des Hinweises auf die Patenterteilung: **01.10.2014**
(21) Anmeldenummer: 10001553.6
(22) Anmeldetag: 16.02.2010
(51) Int. Cl.: B42C 19/08, B65G 17/12

(54) **Buchbindemaschine**
Book binding machine
Machine de reliure de livre

(30) Priorität: 23.02.2009 DE 102009010191
(43) Veröffentlichungstag der Anmeldung: 25.08.2010
(73) Patentinhaber: Kolbus GmbH & Co. KG, 32369 Rahden (DE)
(72) Erfinder: Garlichs, Jürgen, 32369 Rahden (DE); Müller, Christian Heiner, 32312 Lübbecke (DE); Walther, Andreas, 32257 Bünde (DE)

(56) Entgegenhaltungen:
- DE-A1- 10 221 542
- DE-U1-202008 001 353

## Beschreibung

Die Erfindung betrifft eine Buchbindemaschine zur Verarbeitung von Buchblocks mit ei nem Transportsystem mit einer Vielzahl von in einer geschlossenen Umlaufbahn kontinuierlich bewegbaren und an einem Zugmittel angelenkten Buchblockzangen zur Aufnahme der Buchblocks, wobei das Zugmittel um ein Antriebsrad und ein Umlenkrad umläuft und mittels einer Spanneinrichtung gespannt ist, und mit im Bereich gerader Wegstrecken der Umlaufbahn angeordneten Bearbeitungsstationen.

Eine Buchbindemaschine dieser Bauart, ein so genannter Klebebinder, ist beispielsweise in der DE 198 46 525 A1 beschrieben. Aus Blättern und/oder Falzbogen lose zusammengetragene Buchblocks werden in den Buchblockzangen des Transportsystems mit einem definierten Aushang transportiert und durch Auftragen eines Klebstoffs auf den bearbeiteten Blockrücken zu einem Buchblock verbunden. Mit einer Umschlaganlege- und -anpresseinrichtung erfolgt das Verbinden eines ggf. gerillten Umschlags mit dem Buchblock, wobei der Umschlag während der kontinuierlichen Bewegung des Buchblocks an den Blockrücken sowie angrenzende Seitenbereiche gepresst wird.

Der Antrieb des Zugmittels mit den Buchblockzangen erfolgt von einem auf dem Gestellboden mit horizontal ausgerichteter Abtriebswelle platzierten Antriebsmotor aus, der über verschiedene spiel- und elastizitätsbehaftete Antriebselemente, wie Übersetzungs- und Winkelgetriebe, Wellen, Riemen oder/und Ketten, mit dem Antriebsrad des Transportsystems verbunden ist und über eine längs im Klebebinder verlaufende Königswelle verschiedene Bearbeitungsstationen einschl. der Ein- und Ausfuhreinrichtungen mit antreibt.

Das Spannen des Zugmittels muss aufgrund der Querverbindungen zu den in der Umlaufbahn geführten Buchblockzangen durch Verschieben des Umlenk- oder Antriebsrades längs zu den geraden Wegstrecken der Umlaufbahn erfolgen. In den bekannten Klebebindern wird wegen des Antriebsstrangs zum Antriebsrad mit dem nicht angetriebenen Umlenkrad gespannt, was die Gestaltungsmöglichkeit hinsichtlich der Anordnung der Antriebs- und Umlenkräder in Bezug auf die Umlaufbahn und zugeordneter Bearbeitungsstationen einschränkt.

Für die Qualität einzelner Bearbeitungsschritte ist es wichtig, dass sich die Buchblockzangen zu bestimmten Zeitpunkten an definierten Stellen befinden. Das Zugmittel, beispielsweise eine Kette, bildet jedoch in Verbindung mit der Elastizität des Antriebsstranges zwischen Antriebsmotor und Zugmittel ein schwingungsfähiges System, das aufgrund der hohen Masse des Zugmittels mit den Buchblockzangen niedrige Eigenfrequenzen aufweist, die durch periodisch mit dem Maschinentakt auftretenden Störeinflüssen angeregt werden können. Beim Aufschwingen des Zugmittels kommt es dadurch an den jeweiligen Stellen zu von Buchblockzange zu Buchblockzange unterschiedlich ausfallenden Lagefehlern, die auch durch entsprechende Gegenmaßnahmen in den Bearbeitungsstationen nicht mehr vollständig kompensiert werden können. Durch die Schwingungen des Zugmittels kommt es am Antrieb des Zugmittels zu schwellenden Antriebsmomenten, die die Lebensdauer des Zugmittels herabsetzen.

Aus der DE 102 21 542 A1 ist eine Buchbindemaschine der obigen Bauart bekannt, bei der das Transportsystem der Buchblockzangen und wenigstens eine Bearbeitungsstation unabhängig voneinander antreibbar sind. Zur Steuerung dieser Bearbeitungsstation im Sinne einer Positionieraufgabe ist ein Messsystem zur Positionserfassung der jeweiligen Buchblockzange bzw. Buchblocks in der Nähe dieser Bearbeitungsstation vorgesehen. Das Gesamtantriebssystem ist in weniger schwingungsanfällige Teilsysteme aufgegliedert und die verschiedenen Bearbeitungen können durch die Positionsmessung im Bereich der Bearbeitungsstation wesentlich genauer ausgeführt werden. Zwischen dem Antriebsmotor und dem Antriebsrad des Zugmittels liegt aber noch ein elastischer Antriebsstrang vor.

Der Erfindung liegt die Aufgabe zugrunde, eine Buchbindemaschine der eingangs genannten Art zu schaffen, die bei einfacher Konstruktion des Transportsystems einen möglichst steifen und spielfreien Antrieb für die Buchblockzangen aufweist.

Diese Aufgabe wird dadurch gelöst, dass das Antriebsrad von einem getriebelosen, rotativen, elektrischen Direktantrieb angetrieben ist, wobei eine erste, rotierende Komponente des rotativen Direktantriebs direkt an dem Antriebsrad befestigt oder ausgebildet ist. Durch den totalen Wegfall der mit Elastizität behafteten Übertragungselemente ist das Antriebsrad für das Zugmittel relativ zur Motorachse nicht schwingungsfähig und absolut spielfrei. Das Antriebsrad stellt quasi selbst das Antriebsmoment für den Antrieb des Zugmittels bereit. Die absolut steife Verbindung zwischen Antriebsmotor und Masse des Zugmittels mit den Buchblockzangen ermöglicht es, den Regler des Antriebsmotors störungsoptimiert zu betreiben und so direkter auf Störeinflüsse (z.B. aus Prozesskräften) zu reagieren. Aus der Lage der Motorachse kann direkt auf die Position der jeweiligen Buchblockzange geschlossen werden. Aus den evtl. auftretenden Schwankungen im vom Direktantrieb aufzubringenden Antriebsmoment kann auf Unregelmäßigkeiten einzelner Prozesse (z.B. beim Fräsen des Blockrückens) geschlossen werden. Durch die direkte Anbindung des Antriebes an die zu bewegende Hauptmasse des Zugmittels mit den Buchblockzangen ergibt sich außerdem ein sicherheitsrelevanter Vorteil, da eine Überlast in der Klammerkette schneller erkannt werden kann. Durch den Wegfall des kompletten Antriebsstrangs vereinfacht sich die Konstruktion des Transportsystems erheblich. Der durch den Wegfall des Antriebsstrangs frei werdende Bauraum kann für Bearbeitungsstationen oder Hilfsaggregate genutzt werden.

Nach einer Weiterbildung der Erfindung ist vorgesehen, dass das Antriebsrad in einem zum Gestell verschieb- und festlegbaren, wenigstens ein Lagerschild oder eine Achsaufnahme aufweisenden Lagerbock der Spanneinrichtung aufgenommen ist. Antrieb und Spanneinrichtung sind in einer Einheit integriert und wirken am gleichen Umlenkrad. Hierdurch ergeben sich verschiedenste Gestaltungsmöglichkeiten, insbesondere bei der Anordnung der Antriebs- und Umlenkräder an dem Transportsystem. Gleichzeitig verkleinert sich der benötigte Bauraum und das andere, nicht angetriebene Umlenkrad kann in einer einfachen Gestellkonstruktion gelagert werden.

Nach einer Weiterbildung der Erfindung ist vorgesehen, dass der rotative Direktantrieb oberhalb des Antriebsrads angeordnet ist. Dies ermöglicht eine gute Zugänglichkeit und verhindert die Verschmutzung des Direktantriebs durch herunterfallenden Papierstaub.

Vorzugsweise ist der rotative Direktantrieb zwischen dem Antriebsrad und dem Lagerschild bzw. der Achsaufnahme angeordnet. Dies ermöglicht eine besonders steife Ausgestaltung der Lagerung des Antriebsrades und der Antriebsverbindung zwischen Direktantrieb und Antriebsrad. Eine besonders kompakte Ausführung ergibt sich, wenn nach einer Weiterbildung eine zweite, stillstehende Komponente des rotativen Direktantriebs an dem Lagerschild bzw. der Achsaufnahme befestigt oder ausgebildet ist. In weiterer Ausbildung ist vorgesehen, dass das Lagerschild bzw. die Achsaufnahme lösbar angeordnet ist, sodass sich eine in Achsrichtung des Direktantriebs liegende Zugangsöffnung ergibt. Dies ermöglicht eine gute Zugänglichkeit für die Montage/Demontage und Inspektion des Direktantriebs.

Vorzugsweise ist das Antriebsrad auf einer feststehenden Achse drehbar gelagert. Dies ermöglicht eine konstruktiv einfache und dennoch steife Lagerung des Antriebsrads.

Vorzugsweise ist die erste, rotierende Komponente des rotativen Direktantriebs mit Permanentmagneten bestückt. Die für die Bestromung und Positionsrückführung erforderlichen Anschlussleitungen befinden sich somit nicht an der rotierenden Komponente sondern an der stillstehenden zweiten Komponente des Direktantriebs.

Nach einer Weiterbildung ist vorgesehen, dass wenigstens eine Bearbeitungsstation über Antriebsmittel von dem besagten Antriebsrad aus mit antreibbar ist. Der Antrieb geht von dem Antriebsrad aus, von dem aus direkt auf die Position der jeweiligen Buchblockzange geschlossen werden kann. Positionsabhängige Bearbeitungsschritte, bspw. das Anlegen eines Umschlags, können hierdurch mit hoher Genauigkeit durchgeführt werden. Vorzugsweise ist mit besagtem Antriebsrad eine Königswelle antriebsverbunden, von der aus mehrere Bearbeitungsstationen, bspw. auch die Ein- und Ausfuhreinrichtungen, antreibbar sind. Die Königswelle erhält ihren Antrieb vom Antriebsrad aus und treibt nicht mehr wie bisher das Antriebsrad an.

Vorzugsweise ist das besagte Antriebsrad im Bereich der Umschlaganlege- und - anpresseinrichtung angeordnet. Die Zusammenführung von Umschlag und Buchblock erfolgt unmittelbar in dem Zeitpunkt, in dem die Buchblockzange gerade das Antriebsrad verlässt. Ggf. auftretende Toleranzen in dem Zugmittel können sich somit nicht auf die Ausrichtung zugeführter Umschläge zu den Buchblocks auswirken.

Ein Ausführungsbeispiel einer erfindungsgemäßen Buchbindemaschine wird anhand der folgenden Figur detailliert beschrieben. Es zeigt die
- Fig.: in einer Schnittansicht ein erfindungsgemäßes Antriebssystem für ein Transportsystem eines Klebebinders.

Das Transportsystem 2 des Klebebinders 1 weist eine Vielzahl von in einer geschlossenen Umlaufbahn kontinuierlich bewegbaren und an einer Transportkette 63 angelenkten Buchblockzangen 40 auf. Die Buchblockzangen 40 sind mit an einer inneren Klemmbacke 41 drehbar aufgenommenen Führungs- und Stützrollen 43, 44 in unteren und oberen Führungsschienen 12, 13 eines Gestells 10 geführt und über Ausleger 45 an Gelenkbolzen 64 der Transportkette 63 angelenkt. Mit einer relativ zur inneren Klemmbacke 41 bewegbaren, äußeren Klemmbacke 42 sind lose zusammengetragene Buchblocks 3 mit nach unten herausragendem Blockrücken in den Buchblockzangen 40 einspannbar.

Die Transportkette 63 läuft um ein Antriebskettenrad 55 und ein nicht weiter dargestelltes Umlenkkettenrad um und bildet zusammen mit den Führungsschienen 12, 13 eine ovalförmige Umlaufbahn. Entlang gerader Wegstrecken der Umlaufbahn können verschiedene Bearbeitungsstationen angeordnet sein.

Das Antriebskettenrad 55 ist als Spannrad in einem auf einer Konsole 11 relativ zum Gestell 10 verschieb- und festlegbaren Lagerbock 20 drehbar gelagert. Der im Wesentlichen U-förmig ausgebildete Lagerbock 20 weist einen oberen und einen unteren Schenkel 22, 24 auf, die über einen Steg 21 miteinander verbunden sind und eine obere bzw. untere Führung 23, 25 darbieten als entsprechende Verlängerungen der gestellfesten Führungsschienen 12, 13 für die Buchblockzangen 40. Der Lagerbock 20 wird zum Spannen der Transportkette 63 mittels einer an einem Ausleger 26 des unteren Schenkels 24 angreifenden Spannschraube 27 relativ zum Gestell 10 verschoben.

Das Antriebskettenrad 55 ist erfindungsgemäß von einem getriebelosen, rotativen, elektrischen Direktantrieb 50 (auch als Torquemotor bekannt) angetrieben. Das Antriebsrad 55 stellt quasi selbst das Antriebsmoment für den Antrieb der Transportkette 63 bereit. Zwischen Antriebsrad 55 und Direktantrieb 50 gibt es keine mit Elastizität behafteten Übertragungselemente, sodass das Antriebsrad 55 relativ zur Motorachse nicht schwingungsfähig und absolut spielfrei ist. Die Transportkette 63 stellt aufgrund ihrer überdimensionierten Auslegung ein in sich steifes Zugmittel dar, sodass gesamthaft ein absolut steifes Transportsystem 2 für die Buchblockzangen 40 geschaffen worden ist.

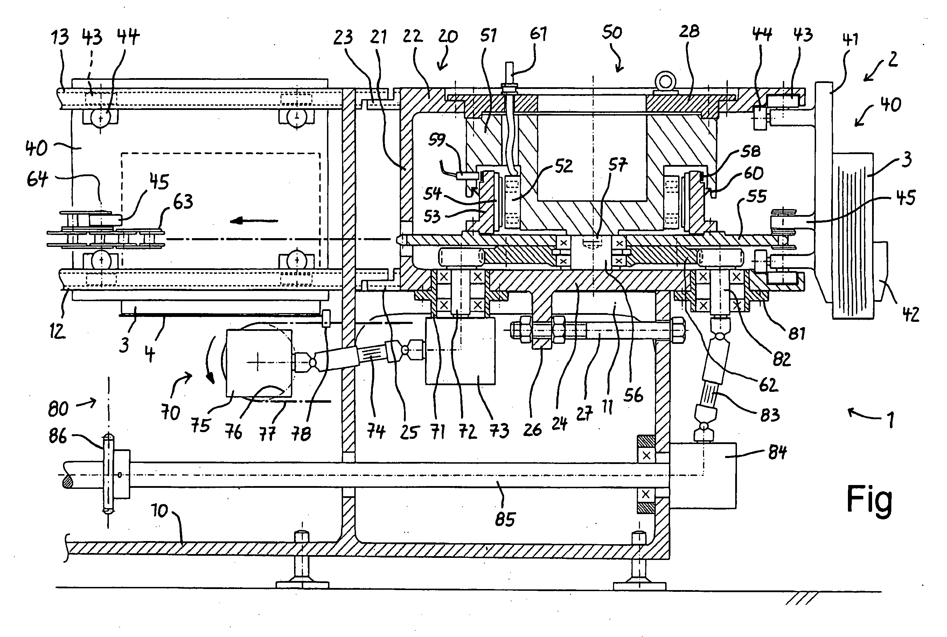

Eine erste, rotierende Komponente 53 (Rotor) des Direktantriebs 50 ist direkt an dem Antriebskettenrad 55 befestigt und mit Permanentmagneten 54 bestückt. Eine zweite, stillstehende Komponente 51 (Stator) befindet sich an einem im oberen Schenkel 22 eingelassenen Deckel 28 und beinhaltet die Magnetspulen 52. Ein Motoranschlusskabel 61 ist von der stillstehenden Komponente 51 zu einer in der Figur nicht weiter dargestellten Motorsteuerung für den Direktantrieb 50 fest verlegt.

Für die Positionsrückführung des Direktantriebs 50 ist an der rotierenden Komponente 53 eine geschlossen umlaufende Maßverkörperung 58 angeordnet, welche von einem an der stillstehenden Komponente 51 angeordneten Sensor 59 abgetastet wird.

Das Antriebskettenrad 55 mit der fest daran angeordneten ersten Komponente 53 des Direktantriebs 50 ist auf einer in dem unteren Schenkel 24 aufgenommenen Achse 56 drehbar gelagert. Über einen Zapfen 57 ist die mit dem oberen Schenkel 22 verbundene, stillstehende Komponente 51 mit der Achse 56 verbunden, sodass sich der an sich offene, U-förmige Lagerbock 20 zu einem geschlossenen, absolut steifen Ringkörper erweitert. Dadurch wird eine besonders steife Lagerung für das Antriebskettenrad 55 ermöglicht.

Die Kühlung des Direktantriebs 50 erfolgt nicht nur über die massige, topfförmig ausgebildete stillstehende Komponente 51, sondern auch über den Lagerbock 20, mit dem die stillstehende Komponente 51 flächig verschraubt ist. Die Kühlfläche kann durch entsprechende Rippen an der stillstehenden Komponente 51, am Deckel 28 und/oder an dem Lagerbock 20 noch weiter vergrößert werden. Eine Fremdbelüftung, insbesondere des Innenraums des Direktantriebs 50 ist nicht erforderlich. Dieser ist durch eine am Umfang der beiden Komponenten 51, 53 vorgesehene Dichtung 60 abgedichtet. Eine Verschmutzung wird auch dadurch erheblich reduziert, dass der rotative Direktantrieb 50 oberhalb des Antriebskettenrades 55 angeordnet ist.

Im Gegensatz zu den unten im Klebebinder liegenden Antriebsmotoren aus dem Stand der Technik ist eine gute Zugänglichkeit des Direktantriebs 50 gegeben. Der Deckel 28, an dem die stillstehende Komponente 51 befestigt ist, ist dazu lösbar an dem Lagerbock 20 aufgenommen und legt eine in Achsrichtung des Direktantriebs 50 liegende Zugangsöffnung frei. Die Zugangsöffnung ist dabei so groß, dass der Direktantrieb 50 oder wenigstens einzelne Komponenten 51, 53 usw. entnehmbar sind, ohne dass diese weiter zerlegt werden müssen. Im vorliegenden Ausführungsbeispiel kann gleichzeitig mit dem Anheben des Deckels 28 die stillstehende Komponente 51 gezogen werden. Montage/Demontage und/oder Inspektion des rotativen Direktantriebs 50 werden dadurch sehr vereinfacht.

Wie bereits oben dargelegt, sind der Antrieb und die Spanneinrichtung des Transportsystems 2 in einer Einheit integriert und wirken am gleichen Umlenkrad, nämlich dem Antriebskettenrad 55. Dies benötigt nur einen geringen Bauraum und das andere, nicht angetriebenen Umlenkkettenrad kann in einer einfachen Gestellkonstruktion ebenfalls auf einer feststehenden Achse drehbar gelagert werden.

Insbesondere ergibt sich durch die integrierte Bauweise die Möglichkeit, den Antrieb an das Ende des Transportsystems 2 zu legen, an dem sich die Umschlaganlege- und -anpresseinrichtung befindet. Die Umschlagzuführung 70 kann so vom direkt angetriebenen Antriebskettenrad 55 aus mit angetrieben werden. Hierzu ist unter dem Antriebskettenrad 55 ein Zahnrad 62 befestigt, welches mit einer in einem Lagerflansch 71 gelagerten Ritzelwelle 72 im Eingriff steht. Über ein Winkelgetriebe 73, eine Gelenkwelle 74 - für den Längenausgleich wegen des Spannens - und ein weiteres Winkelgetriebe 75 wird die abgegriffene Drehbewegung auf Kettenräder 76 der Umschlagzuführung 70 übertragen.

Die Kettenräder 76 wiederum treiben Förderketten 77 an, die aufgrund der Antriebsverbindung mit dem Antriebskettenrad 55 des Transportsystems 2 synchron zu den Buchblockzangen 40 laufen und mittels entsprechend angeordneter Mitnehmer 78 Umschläge 4 mit den Buchblocks 3 zusammenführen. Aufgrund der kurzen Antriebsverbindung mit dem die Position der Buchblockzangen 40 bestimmenden Antriebskettenrad 55 und dem Umstand, dass an diesem Antriebsabgriff nur die Umschlagzuführung 70 verbunden ist, kann eine sehr hohe Genauigkeit bei der Zusammenführung von Buchblock 3 und Umschlag 4 erzielt werden.

Moderne Antriebskonzepte sehen vor, die verschiedenen Funktionen mit Einzelantrieben zu versehen. So kann auch nach der Erfindung einzig das Transportsystem 2 der Buchblockzangen 40 mit dem dargelegten rotativen Direktantrieb 50 angetrieben sein und die anderen Bearbeitungsstationen, einschl. der Einfuhr- und Ausfuhreinrichtungen sowie der Umschlagzuführung 70, weisen einen oder mehrere separate Einzelantriebe auf, die dann über eine gemeinsame Steuereinrichtung miteinander verbunden sind, mit dem rotativen Direktantrieb 50 als Master.

Für einen antriebsmäßig einfachen Klebebinder 1 kann der dargelegte rotative Direktantrieb 50 gleichzeitig als Antrieb für verschiedene Bearbeitungsstationen oder gar als Hauptantrieb für den gesamten Klebebinder 1 dienen. Hierzu ist im Ausführungsbeispiel ein weiterer Antriebsabgriff vorgesehen, wobei eine im Lagerflansch 81 gelagerte Ritzelwelle 82 im Eingriff mit dem genannten Zahnrad 62 steht und über eine Gelenkwelle 83 (für den Längenausgleich wegen des Spannens) und ein Winkelgetriebe 84 mit einer Königswelle 85 gekoppelt ist. Von der Königswelle 85 aus sind nun verschiedene Bearbeitungsstationen antreibbar. Im Ausführungsbeispiel ist ein Kettenrad 86 auf der Königswelle 85 befestigt, von dem aus der Antrieb einer nicht weiter dargestellten Bearbeitungsstation 80 erfolgt.

**Bezugszeichenliste**

| | | | |
|---|---|---|---|
| **1** | Klebebinder | **55** | Antriebskettenrad |
| **2** | Transportsystem | **56** | Achse |
| **3** | Buchblock | **57** | Zapfen |
| **4** | Umschlag | **58** | Maßverkörperung |
| | | **59** | Sensor |
| **10** | Gestell | **60** | Dichtung |
| **11** | Konsole | **61** | Motoranschlusskabel |
| **12** | Untere Führungsschiene | **62** | Zahnrad |
| **13** | Obere Führungsschiene | **63** | Transportkette |
| | | **64** | Gelenkbolzen |
| **20** | Lagerbock | | |
| **21** | Steg | **70** | Umschlagzuführung |
| **22** | Oberer Schenkel | **71** | Lagerflansch |
| **23** | Obere Führung | **72** | Ritzelwelle |
| **24** | Unterer Schenkel | **73** | Winkelgetriebe |
| **25** | Untere Führung | **74** | Gelenkwelle |
| **26** | Ausleger | **75** | Winkelgetriebe |
| **27** | Spannschraube | **76** | Kettenrad |
| **28** | Deckel | **77** | Förderkette |
| | | **78** | Mitnehmer |
| **40** | Buchblockzange | | |
| **41** | Innere Klemmbacke | **80** | Antrieb Bearbeitungsstation |
| **42** | Äußere Klemmbacke | **81** | Lagerflansch |
| **43** | Führungsrolle | **82** | Ritzelwelle |
| **44** | Stützrolle | **83** | Gelenkwelle |
| **45** | Ausleger | **84** | Winkelgetriebe |
| | | **85** | Königswelle |
| **50** | Direktantrieb | **86** | Kettenrad |
| **51** | Stillstehende Komponente | | |
| **52** | Magnetspule | | |
| **53** | Rotierende Komponente | | |
| **54** | Permanentmagnet | | |

## Patentansprüche

1. Buchbindemaschine zur Verarbeitung von Buchblocks (3)
mit einem Transportsystem (2) mit einer Vielzahl von in einer geschlossenen Umlauf bahn kontinuierlich bewegbaren und an einem Zugmittel (63) angelenkten Buchblockzangen (40) zur Aufnahme der Buchblocks (3), wobei das Zugmittel (63) um ein Antriebsrad (55) und ein Umlenkrad umläuft und mittels einer Spanneinrichtung gespannt ist, und mit im Bereich gerader Wegstrecken der Umlaufbahn angeordneten Bearbeitungsstationen (70 ,80),
**dadurch gekennzeichnet, dass** das Antriebsrad (55) von einem getriebelosen, rotativen, elektrischen Direktantrieb (50) angetrieben ist, wobei eine erste, rotierende Komponente (53) des rotativen Direktantriebs (50) direkt an dem Antriebsrad (55) befestigt oder ausgebildet ist.

2. Buchbindemaschine nach Anspruch 1, **dadurch gekennzeichnet, dass** das Antriebsrad (55) in einem zum Gestell (10) verschieb- und festlegbaren, wenigstens ein Lagerschild oder eine Achsaufnahme (22, 24, 28) aufweisenden Lagerbock (20) der Spanneinrichtung aufgenommen ist.

3. Buchbindemaschine nach Anspruch 1 oder 2, **dadurch gekennzeichnet, dass** der rotative Direktantrieb (50) oberhalb des Antriebsrads (55) angeordnet ist.

4. Buchbindemaschine nach einem der Ansprüche 1 bis 3, **dadurch gekennzeichnet, dass** der rotative Direktantrieb (50) zwischen dem Antriebsrad (55) und dem Lagerschild bzw. der Achsaufnahme (22, 28) angeordnet ist.

5. Buchbindemaschine nach Anspruch 4, **dadurch gekennzeichnet, dass** eine zweite, stillstehende Komponente (51) des rotativen Direktantriebs (50) an dem Lagerschild bzw. der Achsaufnahme (28) befestigt oder ausgebildet ist.

6. Buchbindemaschine nach einem der Ansprüche 1 bis 5, **dadurch gekennzeichnet, dass** zur Entnahme wenigstens einzelner Komponenten (51, 53) des Direktantriebs (50) das Lagerschild bzw. die Achsaufnahme (28) lösbar angeordnet ist, sodass sich eine in Achsrichtung des Direktantriebs (50) liegende Zugangsöffnung ergibt.

7. Buchbindemaschine nach einem der Ansprüche 1 bis 6, **dadurch gekennzeichnet, dass** das Antriebsrad (55) auf einer feststehenden Achse (56) drehbar gelagert ist.

8. Buchbindemaschine nach einem der Ansprüche 1 bis 7, **dadurch gekennzeichnet, dass** die erste, rotierende Komponente (53) des rotativen Direktantriebs (50) mit Permanentmagneten (54) bestückt ist.

9. Buchbindemaschine nach einem der Ansprüche 1 bis 8, **dadurch gekennzeichnet, dass** wenigstens eine Bearbeitungsstation (70, 80) über Antriebsmittel (62, 72, 73, 74, 75 bzw. 82, 83, 84, 85, 86) von dem Antriebsrad (55) antreibbar ist.

10. Buchbindemaschine nach einem der Ansprüche 1 bis 9, **dadurch gekennzeichnet, dass** für den Antrieb mehrerer Bearbeitungsstationen (80) eine Königswelle (85) mit dem Antriebsrad (55) antriebsverbunden ist.

11. Buchbindemaschine nach einem der Ansprüche 1 bis 10, **dadurch gekennzeichnet, dass** das Antriebsrad (55) im Bereich einer Umschlaganlege- und -anpresseinrichtung (70) angeordnet ist.

## Claims

1. A book binding machine for processing book blocks (3)
with a transport system (2) that features a plurality of book block clamps (40) for receiving the book blocks (3) that can be continuously moved along a closed circulation path and are coupled to a traction mechanism (63), wherein the traction mechanism (63) revolves around a driving wheel (55) and a deflection wheel and is tensioned by means of a tensioning device, and with processing stations (70, 80) that are arranged in the region of a straight sections of the circulation path,
**characterized in that** the driving wheel (55) is driven by a gearless, rotative electric direct drive (50), wherein a first rotating component (53) of the rotative direct drive (50) is mounted or realized directly on the driving wheel (55).

2. The book binding machine according to claim 1, **characterized in that** the driving wheel (55) is accommodated in a bearing block (20) of the tensioning device that can be displaced and fixed relative to the frame (10) and features at least one end plate or an axle receptacle (22, 24, 28).

3. The book binding machine according to claim 1 or 2, **characterized in that** the rotative direct drive (50) is arranged above the driving wheel (55).

4. The book binding machine according to one of claims 1 to 3, **characterized in that** the rotative direct drive (50) is arranged between the driving wheel (55) and the end plate or the axle receptacle (22, 28).

5. The book binding machine according to claim 4, **characterized in that** a second stationary component (51) of the rotative direct drive (50) is mounted or realized on the end plate or the axle receptacle (28).

6. The book binding machine according to one of claims 1 to 5, **characterized in that** the end plate or the axle receptacle (28) is arranged in a detachable fashion in order to form an access opening in the axial direction of the direct drive (50) for removing at least individual components (51, 53) of the direct drive (50).

7. The book binding machine according to one of claims 1 to 6, **characterized in that** the driving wheel (55) is rotatably supported on a stationary axle (56).

8. The book binding machine according to one of claims 1 to 7, **characterized in that** the first rotating component (53) of the rotative direct drive (50) is fitted with permanent magnets (54).

9. The book binding machine according to one of claims 1 to 8, **characterized in that** at least one processing station (70, 80) can be driven by the driving wheel (55) via driving means (62, 72, 73, 74, 75 or 82, 83, 84, 85, 86).

10. The book binding machine according to one of claims 1 to 9, **characterized in that** a vertical shaft (85) is functionally connected to the driving wheel (55) in order to drive several processing stations (80).

11. The book binding machine according to one of claims 1 to 10, **characterized in that** the driving wheel (55) is arranged in the region of the cover feeding and pressing device (70).

## Revendications

1. Machine de reluire de livre pour la mise en oeuvre de blocs de livres (3),
avec un système de transport (2) avec une pluralité de pinces (40) à blocs de livre déplaçables en continu dans une orbite fermée et articulées sur un moyen de traction (63) pour la reprise des blocs de livres (3), le moyen de traction (63) tournant autour d'une roue d'entraînement (55) et une roue de renvoi et étant serré au moyen d'un système de serrage et avec des postes de traitement (70, 80) placés dans la zone des trajets droits de l'orbite,
**caractérisée en ce que** la roue d'entraînement (55) est entraînée par un entraînement direct (50) électrique, rotatif, sans engrenage, un premier composant (53) en rotation de l'entraînement direct (50) rotatif étant directement fixé ou conçu sur la roue d'entraînement (55).

2. Machine de reluire de livre selon la revendication 1, **caractérisée en ce que** la roue d'entraînement (55) est logée dans un support de palier (20) du système de serrage susceptible d'être déplacé et fixé par rapport au châssis (10), comportant au moins un flasque ou un logement d'essieu (22, 24, 28).

3. Machine de reluire de livre selon la revendication 1 ou 2, **caractérisée en ce que** l'entraînement direct (50) rotatif est placé au-dessus de la roue d'entraînement (55).

4. Machine de reluire de livre selon l'une quelconque des revendications 1 à 3, **caractérisée en ce que** l'entraînement direct (50) rotatif est placé entre la roue d'entraînement (55) et le flasque ou le logement d'essieu (22, 28).

5. Machine de reluire de livre selon la revendication 4, **caractérisée en ce qu'**un deuxième composant (51) fixe de l'entraînement direct (50) rotatif est fixé ou conçu sur le logement d'essieu (28).

6. Machine de reluire de livre selon l'une quelconque des revendications 1 à 5, **caractérisée en ce que** pour prélever au moins des composants individuels (51, 53) de l'entraînement direct (50), le flasque ou le logement d'essieu (28) est placé de manière amovible, de sorte qu'il en résulte un orifice d'accès situé dans la direction axiale de l'entraînement direct (50).

7. Machine de reluire de livre selon l'une quelconque des revendications 1 à 6, **caractérisée en ce que** la roue d'entraînement (55) est logée de manière rotative sur un axe (56) stationnaire.

8. Machine de reluire de livre selon l'une quelconque des revendications 1 à 7, **caractérisée en ce que** le premier composant (53) en rotation de l'entraînement direct (50) rotatif est équipé d'aimants permanents (54).

9. Machine de reluire de livre selon l'une quelconque des revendications 1 à 8, **caractérisée en ce qu'**au moins un poste de traitement (70, 80) est susceptible d'être entraîné par l'intermédiaire de moyens d'entraînement (62, 72, 73, 74, 75 ou 82, 83, 84, 85, 86) de la roue d'entraînement (55).

10. Machine de reluire de livre selon l'une quelconque des revendications 1 à 9, **caractérisée en ce que** pour l'entraînement de plusieurs postes de traitement (80), un arbre de renvoi (85) est relié en entraînement avec la roue d'entraînement (55).

11. Machine de reluire de livre selon l'une quelconque des revendications 1 à 10, **caractérisée en ce que** la roue d'entraînement (55) est placée dans la zone d'un système margeur de couverture et système de pressage (70).
